# EUROPEAN PATENT SPECIFICATION

(11) **EP 3 797 188 B1**
(45) Date of publication and mention of the grant of the patent: **19.03.2025**
(21) Application number: 18726778.6
(22) Date of filing: 21.05.2018
(51) Int. Cl.: D06F 33/00, D06F 58/30, D06F 39/00, D06F 37/30, D06F 58/20, D06F 34/05, D06F 103/32, H01F 27/26, H01F 38/14, H02J 50/10, D06F 58/26, H01F 27/36

(54) **LAUNDRY DRIER**
WÄSCHETROCKNER
SÈCHE-LINGE

(43) Date of publication of application: 31.03.2021
(73) Proprietor: ELECTROLUX APPLIANCES AKTIEBOLAG, 105 45 Stockholm (SE)
(72) Inventor: ROSSI, Giuseppe, 33080 Porcia (PN) (IT); VANIN, Andrea, 33080 Porcia (PN) (IT); MAGUOLO, Costantino, 33080 Porcia (PN) (IT); AZZALIN, Ivan, 33080 Porcia (PN) (IT); CONTARINI, Andrea, 33080 Porcia (PN) (IT); REID, Nicola, 33080 Porcia (PN) (IT)
(74) Representative: Electrolux Group Patents
(86) International application number: PCT/EP2018/063258
(87) International publication number: WO 2019/223849

(56) References cited:
- EP-A1- 2 604 740
- WO-A1-2009/061325
- WO-A1-2018/091717
- WO-A2-2013/022164
- JP-A- 2017 127 402
- US-A1- 2012 192 362
- US-A1- 2016 330 572

## Description

The present invention relates to a laundry drier, in particular to a tumble drier.

Known laundry driers comprise a cabinet, typically parallelepiped-shaped, containing rotatable drum for housing the laundry to be dried. A flow of hot air is circulated through the drum, so as to dry the laundry contained therein.

A heating system is provided for heating the air; the heating system can comprise a heat pump system or one or more electrical heaters, both housed within the cabinet, externally to the drum.

In known laundry driers, there is the problem that, since the drum is rotatable, it is difficult transmitting electrical energy from the "not rotatable" parts of the laundry drier (e.g. the cabinet, or components fixed thereof) to the internal of the drum; this layout, therefore, limits the possibility to mount in the drum electrical devices for treating the laundry and/or for detecting related physical parameters, which require to be electrically powered.

US2016/330572 Al discloses a wireless communication assembly including a driver module connected to a first portion of a machine, such as a laundry machine, and a receiver module connected to a second portion of the machine, such as a rotatable drum. The first module includes a primary coil configured to generate an electromagnetic field and a first wireless transceiver. The second module includes a secondary coil configured to convert energy within the electromagnetic field into electric power, and a second wireless transceiver powered by the secondary coil and configured to communicate with the first wireless transceiver. One or more sensors may be positioned within the drum to measure various conditions. The receiver module may be powered by the secondary coil and when powered on, may communicate data from the one or more sensors to the first module. Other systems according to the prior art are also known from WO 2013/022164 A2, US 2012/192362 A1, JP 2017 127402 A and EP 2 604 740 A1.

It is an object of the present invention to provide a laundry drier which does not present above mentioned problems, and which allows to treat the laundry in a more dedicated, localized, and effective way.

Above object is solved by a laundry drier comprising:
- a cabinet,
- a drum rotatably mounted inside the cabinet,
- one or more support elements for the rotation of the drum, wherein said one or more support elements include one or more rollers,
- at least one electric element mounted in the drum,
- a wireless power transmitter unit fixed to said cabinet or to a component of said laundry drier unmovable with respect to said cabinet,
- a wireless power receiver unit mounted in/on said drum,

wherein said wireless power transmitter unit is electromagnetically coupled with said wireless power receiver unit, for transmitting electric power to the latter, and
wherein said wireless power receiver unit is electrically coupled with said at least one electric element, for supplying electric power to the latter. Said wireless power receiver unit and said wireless power transmitter unit are annular shaped,
centred with the drum centre, and mounted radially parallel respectively on said cabinet, or on said component of said laundry drier unmovable with respect to said cabinet, and on said drum.

It is underlined that *"component unmovable with respect to the cabinet"* means that this component, or element, is fixed to the cabinet, or in other words that this component can't move (e.g. can't rotate, translate, oscillate, etc.) with respect to the cabinet.

Advantageous embodiments are defined by the dependent claims.

Other advantages and features of a laundry drier according to the present invention will be clear from the following detailed description, provided only as a non limitative example, in which:
Fig 1 is a sectional view of a possible embodiment of a laundry drier according to this invention.
Fig. 2 is a sectional view of the drum with lifters and heating elements, taken along the surface II-II of Fig. 1.
Fig. 3 is a sectional view of a detail of a possible embodiment of a wireless transmitter power unit and a wireless receiver power unit according to the invention.
Fig. 4 is a sectional view showing more in detail an advantageous embodiment of the fixation of the wireless power transmitter unit to a fixed or static region of the cabinet and the wireless power receiver unit to the drum.
Fig. 5 is a block diagram of a first embodiment of a power supply circuit of the heating elements.
Fig. 6 is block diagram of another embodiment of a power supply circuit of the heating elements.
Fig. 7 is block diagram of another embodiment of a power supply circuit of the heating elements and of interface unit.

In the figures same parts are indicated with the same reference numbers.

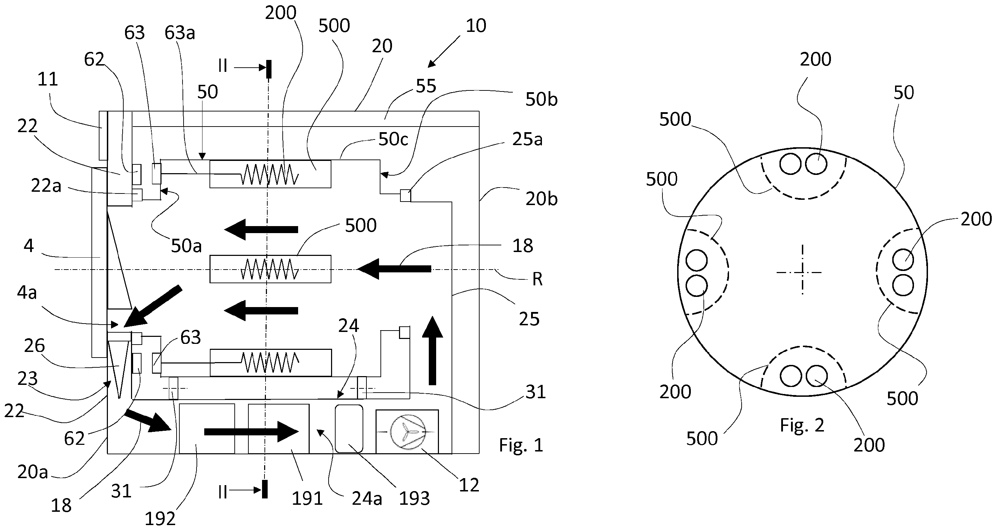

In Fig. 1, an advantageous example of a laundry dryer 10 is illustrated, comprising a cabinet 20, preferably but not necessarily parallelepiped-shaped, and a drying chamber, such as a drum 50, for example having the shape of a hollow cylinder, for housing the laundry, not illustrated, to be dried.

The drum 50 is rotatably supported within the cabinet 20, so that it can rotate around a, preferably horizontal, rotation axis R (in alternative embodiments, rotation axis may be tilted).

Access to the drum 50 is achieved for example via a door 4, preferably hinged to cabinet, which can open and close a loading/unloading opening 4a realized on the cabinet 20 itself.

Cabinet 20 generally includes a front wall 20a, a rear wall 20b, two sidewalls, not illustrated, all preferably mounted on a basement 24.

Cabinet 20 may include also a top wall 55. Preferably, the basement 24 is realized in plastic material, and more preferably it is molded via an injection molding process. Advantageously, basement 24 is hollow, and it preferably contains one or more electromechanical components of the laundry drier 10, as will be better explained in the following.

Laundry dryer 10 also preferably comprises an electrical motor assembly, not illustrated, for rotating, on command, the drum 50 along its axis R.

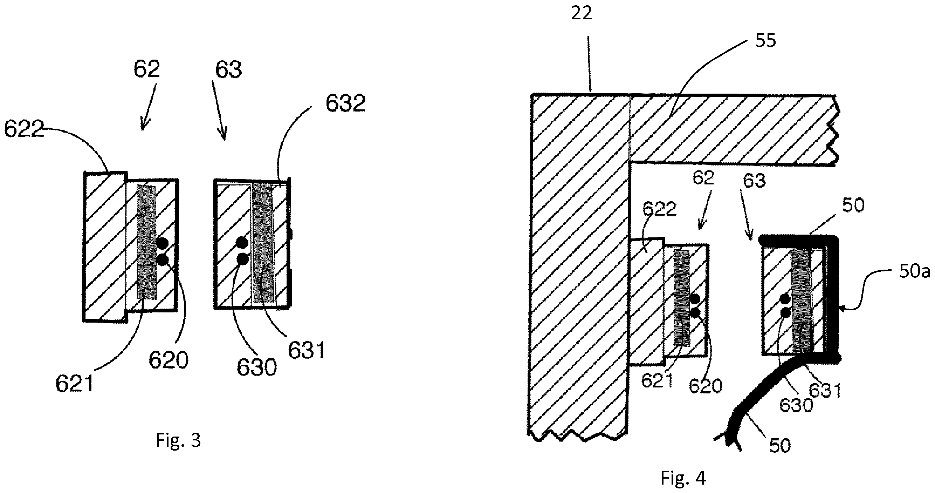

Laundry dryer 10 may include an electronic control unit (for example the of the type numbered 60 in Figs. 3 to 6) which controls both the electrical motor assembly and other components of the dryer 10, to perform, on command, one of the drying cycles preferably stored in the same central control unit. The programs as well other parameters of the laundry dryer 10, or alarm and warning functions can be set and/or visualized in a control panel 11, preferably positioned in a top portion of the dryer 10, such as above door 4.

The drum 50 includes a mantle 50c, having preferably a substantially cylindrical/tubular shape, which is preferably made of metal, and is arranged inside the cabinet 20 and adapted to rotate around the rotational axis R. The drum 50 has a first end 50a facing the loading/unloading opening 4a, and a second end 50b facing the rear wall 20b.

Drum 50 may be an open drum, i.e. both ends 50a and 50b can be opened (as in Fig. 1), or it may include a back wall (not shown in the attached Figures) fixedly connected to the mantle and rotating with the latter.

In order to rotate, one or more support elements for the rotation of the drum 50 are provided; these support elements include one or more roller 31 (preferably two or more), more preferably rotatably associated to the basement 24. Preferably the roller(s) 31 are positioned at the front and/or at the back of the drum 50; more preferably, two rollers 31 are positioned at the front and two rollers 31 are positioned at the back of the drum 50.

In another advantageous embodiment, not illustrated, a drum shaft, connected to a rear end of the drum 50, can support the latter.

Laundry dryer 10 advantageously comprises a process air circuit 18, indicated in Fig. 1 by a plurality of black arrows 18, showing the path flow of a process air stream through the dryer 10.

The process air circuit 18 advantageously comprises the drum 50 and a duct 24a in the basement 24.

The laundry drier 10 also advantageously comprises a fan or blower 12 for circulating process air through the process air circuit 18, and in particular through the drum 50.

The laundry drier 10 advantageously comprise a heating system producing heat for drying the laundry.

In the advantageous embodiment of Fig. 1, the heating system comprises a heat pump system arranged for removing humidity from the process air exhausted from the drum 50, and for heating such air before it re-enters the drum 50, in a condition suitable to further remove humidity from laundry. The heat pump system advantageously comprises a first heat exchanger (called also condenser) 191 and a second heat exchanger (called also evaporator) 192. Heat pump system 19 advantageously comprises a refrigerant closed circuit, not illustrated, in which a refrigerant fluid flows.

Heat pump system also advantageously comprises a compressor 193, receiving refrigerant in a gaseous state from the evaporator 192, and supplying it in a liquid stated to the condenser 191, thereby closing the refrigerant cycle. Preferably, in correspondence of evaporator 192, the laundry dryer 10 may include a condensed-water canister (not illustrated) which collects the condensed water produced, when the laundry dryer 10 is in operation, in the evaporator 192 by condensation of the surplus moisture in the process air stream arriving from the drum 50. Preferably, the canister is located at the bottom of the evaporator 192. Preferably, through a connecting pipe and a pump (not shown in the drawings), the collected water is sent in a reservoir located preferably in correspondence of the highest portion of the dryer 10 so as to facilitate a comfortable manual discharge of the water by the user of the dryer 10.

The condenser 191 and the evaporator 192 of the heat pump system are preferably housed within the duct 24a formed in the basement 24.

In case of a condense-type dryer - as depicted in Fig. 1 - where the process air circuit 18 is a closed loop circuit, the condenser 191 is preferably located downstream (with reference to the air flow direction) of the evaporator 192.

Advantageously, the air exiting the drum 50 reaches the evaporator 192, which cools down and dehumidifies the process air, and then it enters the condenser 191, where it is warmed up by the heat pump system before re-entering the drum 50. Advantageously the laundry drier 10 comprises a frontal wall or flange 22, facing the first end 50a of the drum 50, and preferably comprising the loading/unloading opening 4a.

Advantageously, the first end 50a of the drum 50 abuts against a first cylindric gasket 22a, preferably made of felt, attached to the wall or flange 22.

Advantageously the frontal wall or flange 22 comprises a conduit 23, fluidly connected to the duct 24a of the basement 24, and comprised in the process air circuit 18.

Preferably a removable lint filter 26 is provided in the process air circuit 18 (preferably, but not necessarily, in the conduit 23 of the frontal wall or flange 22); the lint filter 26 is arranged for intercepting the air flow exiting the drum 50 and for collecting lint particles contained therein.

Advantageously the laundry drier 10 comprises a rear pipe 25, fluidly connecting the second end 50b of the drum 50 to the duct 24a of the basement 24. Preferably, the second end 50b of the drum 50 abuts against a second cylindric gasket 25a, preferably made of felt, attached to the rear pipe 25.

The laundry drier 10 comprises a wireless power supply transmitter unit 62, fixed to the cabinet 20 or to a component of the laundry drier unmovable with respect to the cabinet 20; in the example of Fig. 1, the wireless power supply transmitter unit 62 is advantageously fixed to the frontal wall or flange 22.

It is underlined that *"component unmovable with respect to the cabinet 20"* means that this component, or element, is fixed to the cabinet, or in other words that this component can't move (e.g. can't rotate, translate, oscillate, etc.) with respect to the cabinet 20.

The wireless power transmitter unit 62 is advantageously electrically connected, preferably wired, to the electric system, not illustrated, of the laundry drier 10; the electric system is connectable, for example, to the electric mains, not illustrated, of the building where the laundry drier 10 is installed, so as to be power supplied by such electric mains. Advantageously the laundry drier 10 comprises a wireless receiver power unit 63, mounted in/on the drum 50.

The wireless power transmitter unit 62 is electromagnetically coupled with the wireless power receiver unit 63, for transmitting electric power to the latter.

In the advantageous example of Fig. 1, the wireless power receiver unit 63 is mounted on the first end 50a of the drum 50a, facing the frontal wall or flange 22.

In the advantageous example of Fig. 1, the wireless power supply transmitter unit 62 is mounted on the frontal wall or flange 22, so as to face the wireless power receiver unit 63. The wireless receiver power unit 63 and the wireless power supply transmitter unit 62 are annular shaped, centred with the drum centre and mounted radially parallel respectively on the cabinet 20 or component 22 of the laundry drier 10 unmovable with respect to the cabinet 2) to which the wireless power transmitter unit 62 is fixed, and on the drum 50.

Advantageously, the drum 50 is provided with one or more lifters 500 (four in the example of Figs. 1 and 2), to lift the laundry in the drying cycle.

In a preferred embodiment, each lifter 500 comprises or encloses a heating element 200.

The wireless power receiver unit 63, preferably through electric wires 63a electrically supplies the heating elements 200.

Fig. 2 schematically shows a sectional view of an advantageous example of a lifter 500. The heating element 200 is advantageously integrated/contained in the lifter 500; in an advantageous embodiment, the heating element can be cylindrical shaped, and have the same length of the lifter 500 in axial direction.

Preferably the lifters 500 have a perforated structure (i.e. their walls can have openings), so as to allow air to pass through and be heated by the heater 200.

In a preferred embodiment, the heaters 200 can be used as the heating system of the laundry drier 10, i.e. for heating the laundry contained in the drum 50.

In another advantageous embodiment, in which another heating system, for example a heat pump system, is provided in the laundry drier 10, the heater 200 can work together with the other heating system, for example for speeding up the heating process (and thus reducing the drying cycle time).

Preferably, the wireless power receiver unit 63 is fixed parallel in radial direction opposite the wireless power transmitter unit 62.

In Fig. 3 it is shown a sectional view of an advantageous example of the power transmitter unit 62 and receiver unit 63.

Advantageously, the power transmitter unit 62 has a transmission coil 620 which is electromagnetically coupled to a reception coil 630 of the power receiver unit 63. They can be advantageously integrated into the enclosing material 622, 632, and they can advantageously have respectively magnetic sheets 621 and 631 that provide the side magnetic shield to the sides external to the coupling area and improve the magnetic coupling between the two coils 622 and 632.

Preferably, the wireless power receiver unit 63 and the wireless power transmitter unit 62 are parallel, centred with respect to the drum 50 centre in order to maximize the electromagnetic coupling, as shown in Fig. 4.

The wireless power receiver unit 63 could be fixed in a U shaped opening formed in the drum 50 external periphery, while the power transmitter unit could have its side 622 fixed with screw or glued to the wall of the cabinet 200, or, as in Figure 4, to the frontal wall of flange 22.

Advantageously the laundry drier 10 comprises a control unit 60.

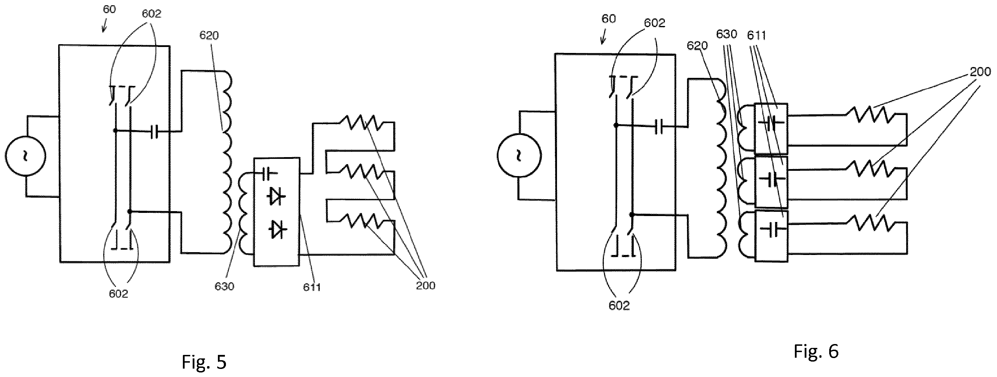

As shown in Fig. 5, advantageously the control unit 60 may generate an oscillating voltage by switching elements 602 that supply the transmission coil 620 of the power transmitter unit 62 coupled to the reception coil 630 of the power receiver unit 63. The voltage induced in the coil 630 is preferably rectified and conditioned in the coil interface block 611, and preferably brought, preferably with wires, to the heating elements 200, preferably connected in series. The components of the interface block 611 could be preferably integrated in the power receiver unit 63.

Advantageously, the appliance control unit 60 manages the complete drying operations, controlling the drum motor rotation speed as well as the other electric/electronic components of the laundry drier 10. Preferably, the appliance control units 60 can measure the temperature in the drum 50, and generate the proper voltage supplying the heating elements, for example through a switching element 602. Another advantageous embodiment is shown in Fig. 6 where the power receiver unit 63 has multiple coils 630, each coil 630 supplying through its own interface block 611 a heating element 200.

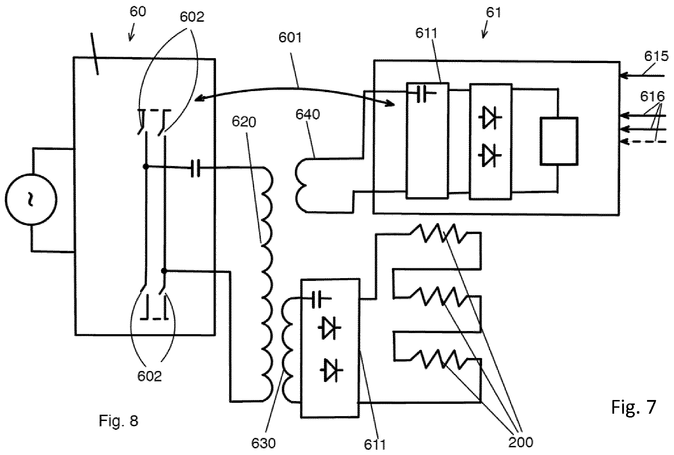

One further advantageous embodiment is shown in Fig. 7. In this embodiment on the drum 50 there is fixed an interface unit 61, together with the power receiver unit 63 and the heating element 200. The interface unit 61 can be supplied by a dedicated reception coil 640 of the receiver unit 63, as shown in Fig. 7, or it could be connected in parallel to the reception coil 630 supplying the heating elements 200.

The interface unit 61 has advantageously a wireless connection 601 to transfer measurement data to the appliance control unit 60.

In particular, the interface unit 61 could transfer to the appliance control unit 60 measured temperatures 615 from temperature measurement elements positioned in the lifters 500.

It would allow to design drying cycles based on the real temperature measured in the drum 50.

The interface unit 61 could be advantageously positioned integrated in the isolating support material 632 of the power receiver unit 63. Advantageously the interface unit 61 could sense and send additional measurement parameters, not only temperatures 615, but also e.g. unbalance, providing all needed sensing information 616 to the appliance control unit 60.

Advantageously, the wireless power receiver unit can supply power to any type of electric element mounted in/on the drum or fixed to the drum, including heating elements, signal transmission and/or reception elements (like wireless data transmission and/or reception devices) and sensor elements (like temperature sensors, humidity sensors, movement sensors such as speed or acceleration sensors).

It is seen therefore how the invention achieves the proposed aim and objects, there being provided a laundry drier which, thanks to the wireless power transmission, allows electrically powering at least one electric element mounted in/on the rotatable drum, which opens new possibilities of treating the laundry, in a more dedicated, localized and effective way.

## Claims

1. A laundry drier (10) comprising:
- a cabinet (20),
- a drum (50) rotatably mounted inside the cabinet (20),
- one or more support elements (31) for the rotation of the drum (50), wherein said one or more support elements include one or more rollers (31),
- at least one electric element (200, 61) mounted in the drum (50),
- a wireless power transmitter unit (62) fixed to said cabinet (20) or to a component (22) of said laundry drier (10) unmovable with respect to said cabinet (20),
- a wireless power receiver unit (63) mounted in/on said drum (50),
wherein said wireless power transmitter unit (62) is electromagnetically coupled with said wireless power receiver unit (63), for transmitting electric power to the latter, and
wherein said wireless power receiver unit (63) is electrically coupled with said at least one electric element (200, 61), for supplying electric power to the latter,
**characterized in that**
said wireless power receiver unit (63) and said wireless power transmitter unit (62) are annular shaped, centred with the drum (50) centre, and mounted radially parallel respectively on said cabinet (20), or on said component (22) of said laundry drier (10) unmovable with respect to said cabinet (20), and on said drum (50).

2. Laundry drier (10) according to claim 1, **characterized in that** said at least one electric element (200, 61) comprises at least one heating element (200).

3. Laundry drier (10) according to claim 1 or 2,
**characterized in that** said at least one electric element (200, 61) comprises at least one interface unit (61) designed to wirelessly transmit data.

4. Laundry drier (10) according to any of the preceding claims, **characterized in that** said electric element (200, 61) comprises at least one sensor element.

5. Laundry drier (10) according to claim 4, **characterized in that** said at least one sensor element comprises at least one temperature sensing element.

6. Laundry drier (10) according to one or more of the previous claims, comprising an electronic control unit (60) which controls electric and electronic components of said laundry drier (10).

7. Laundry drier (10) according to anyone of the preceding claims, **characterized in that** the power transmitter unit (62) comprises a transmission coil (620) generating a magnetic field, and the power receiver unit (63) comprises a reception coil (630) generating power from the magnetic field generated by the transmission coil (620), and supplying the generated power to the at least one electric element (200, 61).

8. Laundry drier (10) according to claim 7, **characterized in that** the transmission coil (620) and the reception coil (630) are aligned, centered and parallel in radial direction.

9. Laundry drier (10) according to claim 7 or 8,
**characterized in that** the transmission coil (620) and the reception coil (630) have a common radius dimension approximately equal to the drum (50) external radius, and are distanced in axial direction by a distance lower than their radius.

10. Laundry drier (10) according to any of the previous claims, **characterized in that** the wireless power receiver unit (63) comprises a receiver magnetic shielding member (631), and the wireless power transmitter unit (62) comprises a transmission magnetic shielding member (621).

11. Laundry drier (10) according to claim 10 when depending on claim 7, **characterized in that** the receiver magnetic shielding member (631) is positioned between the reception coil (630) and the drum (50) side, and the transmission magnetic shielding member (621) is positioned between the transmission coil (620) and the cabinet (20) or component (22) of said laundry drier (10) unmovable with respect to said cabinet (20) to which said wireless power transmitter unit (62) is fixed.

12. Laundry drier (10) according to claim 10 or 11 when depending on claim 6, **characterized in that** the wireless power receiver unit (63) comprises a receiver shielding member (631) positioned on the opposite side of the reception coil (630) with respect to the wireless power transmitter unit (62).

13. Laundry drier (10) according to claim 10 or 11 or 12, when depending on claim 7, **characterized in that** the wireless power transmitter unit (62) comprises a transmission shielding member (621) positioned on the opposite side of the transmission coil (620) with respect to the wireless power receiver unit (63).

14. Laundry drier (10) according to any of the preceding claims, **characterized in that** the wireless power receiver unit (63) comprises at least two reception coils (630) and the at least one electric element (200, 61) comprises at least two electric elements (200, 61), the at least two reception coils (630) supplying, respectively, the at least two electric elements (200, 61).

15. Laundry drier (10) according to any one of the preceding claims when depending on claims 4 and 6 and 7, **characterized in that** the wireless power receiver unit (63) comprises a further coil (640) arranged for wireless transferring to said control unit (60) measurement data from said at least one sensor element.

## Patentansprüche

1. Wäschetrockner (10), umfassend:
- ein Gehäuse (20),
- eine Trommel (50), die innerhalb des Gehäuses (20) drehbar montiert ist,
- ein oder mehrere Stützelemente (31) für die Drehung der Trommel (50), wobei das eine oder die mehreren Stützelemente eine oder mehrere Rollen (31) umfassen,
- mindestens ein elektrisches Element (200, 61), das in der Trommel (50) montiert ist,
- eine drahtlose Leistungssendereinheit (62), die an dem Gehäuse (20) oder an einer Komponente (22) des Wäschetrockners (10) befestigt ist, die in Bezug auf das Gehäuse (20) unbeweglich ist,
- eine drahtlose Leistungsempfängereinheit (63), die in/auf der Trommel (50) montiert ist,
wobei die drahtlose Leistungssendereinheit (62) elektromagnetisch mit der drahtlosen Leistungsempfängereinheit (63) zum Übertragen elektrischer Leistung an die letztere gekoppelt ist, und
wobei die drahtlose Leistungsempfängereinheit (63) elektrisch mit dem mindestens einen elektrischen Element (200, 61) zum Versorgen des letzteren mit elektrischer Leistung gekoppelt ist,
**dadurch gekennzeichnet, dass**
die drahtlose Leistungsempfängereinheit (63) und die drahtlose Leistungssendereinheit (62) ringförmig, mit der Mitte der Trommel (50) zentriert und jeweils radial parallel auf dem Gehäuse (20) oder auf der Komponente (22) des Wäschetrockners (10), die in Bezug auf das Gehäuse (20) unbeweglich ist, und auf der Trommel (50) montiert sind.

2. Wäschetrockner (10) nach Anspruch 1, **dadurch gekennzeichnet, dass** das mindestens eine elektrische Element (200, 61) mindestens ein Heizelement (200) umfasst.

3. Wäschetrockner (10) nach Anspruch 1 oder 2, **dadurch gekennzeichnet, dass** das mindestens eine elektrische Element (200, 61) mindestens eine Schnittstelleneinheit (61) umfasst, die zum drahtlosen Übertragen von Daten ausgestaltet ist.

4. Wäschetrockner (10) nach einem der vorhergehenden Ansprüche, **dadurch gekennzeichnet, dass** das elektrische Element (200, 61) mindestens ein Sensorelement umfasst.

5. Wäschetrockner (10) nach Anspruch 4, **dadurch gekennzeichnet, dass** das mindestens eine Sensorelement mindestens ein Temperaturerfassungselement umfasst.

6. Wäschetrockner (10) nach einem oder mehreren der vorhergehenden Ansprüche, umfassend eine elektronische Steuereinheit (60), die elektrische und elektronische Komponenten des Wäschetrockners (10) steuert.

7. Wäschetrockner (10) nach einem der vorhergehenden Ansprüche, **dadurch gekennzeichnet, dass** die Leistungssendereinheit (62) eine Sendespule (620) umfasst, die ein Magnetfeld erzeugt, und die Leistungsempfängereinheit (63) eine Empfangsspule (630) umfasst, die aus dem von der Sendespule (620) erzeugten Magnetfeld Leistung erzeugt und das mindestens eine elektrische Element (200, 61) mit der erzeugten Leistung versorgt.

8. Wäschetrockner (10) nach Anspruch 7, **dadurch gekennzeichnet, dass** die Sendespule (620) und die Empfangsspule (630) in radialer Richtung ausgerichtet, zentriert und parallel sind.

9. Wäschetrockner (10) nach Anspruch 7 oder 8, **dadurch gekennzeichnet, dass** die Sendespule (620) und die Empfangsspule (630) eine gemeinsame Radiusabmessung aufweisen, die ungefähr gleich dem Außenradius der Trommel (50) ist, und in axialer Richtung um einen Abstand beabstandet sind, der kleiner als ihr Radius ist.

10. Wäschetrockner (10) nach einem der vorhergehenden Ansprüche, **dadurch gekennzeichnet, dass** die drahtlose Leistungsempfängereinheit (63) ein magnetisches Empfängerabschirmungselement (631) umfasst und die drahtlose Leistungssendereinheit (62) ein magnetisches Sendeabschirmungselement (621) umfasst.

11. Wäschetrockner (10) nach Anspruch 10, wenn abhängig von Anspruch 7, **dadurch gekennzeichnet, dass** das magnetische Empfängerabschirmungselement (631) zwischen der Empfangsspule (630) und der Seite der Trommel (50) positioniert ist und das magnetische Sendeabschirmungselement (621) zwischen der Sendespule (620) und dem Gehäuse (20) oder der Komponente (22) des Wäschetrockners (10) positioniert ist, die in Bezug auf das Gehäuse (20), an dem die drahtlose Leistungssendereinheit (62) befestigt ist, unbeweglich ist.

12. Wäschetrockner (10) nach Anspruch 10 oder 11, wenn abhängig von Anspruch 6, **dadurch gekennzeichnet, dass** die drahtlose Leistungsempfängereinheit (63) ein Empfängerabschirmungselement (631) umfasst, das in Bezug auf die drahtlose Leistungssendereinheit (62) auf der entgegengesetzten Seite der Empfangsspule (630) positioniert ist.

13. Wäschetrockner (10) nach Anspruch 10 oder 11 oder 12, wenn abhängig von Anspruch 7, **dadurch gekennzeichnet, dass** die drahtlose Leistungssendereinheit (62) ein Sendeabschirmungselement (621) umfasst, das in Bezug auf die drahtlose Leistungsempfängereinheit (63) auf der entgegengesetzten Seite der Sendespule (620) positioniert ist.

14. Wäschetrockner (10) nach einem der vorhergehenden Ansprüche, **dadurch gekennzeichnet, dass** die drahtlose Leistungsempfängereinheit (63) mindestens zwei Empfangsspulen (630) umfasst und das mindestens eine elektrische Element (200, 61) mindestens zwei elektrische Elemente (200, 61) umfasst, wobei die mindestens zwei Empfangsspulen (630) jeweils die mindestens zwei elektrischen Elemente (200, 61) versorgen.

15. Wäschetrockner (10) nach einem der vorhergehenden Ansprüche, wenn abhängig von Anspruch 4 und 6 und 7, **dadurch gekennzeichnet, dass** die drahtlose Leistungsempfängereinheit (63) eine weitere Spule (640) umfasst, die zum drahtlosen Senden von Messdaten von dem mindestens einen Sensorelement an die Steuereinheit (60) eingerichtet ist.

## Revendications

1. Sèche-linge (10) comprenant :
- un caisson (20),
- un tambour (50) monté de manière rotative à l'intérieur du caisson (20),
- un ou plusieurs éléments de support (31) pour la rotation du tambour (50), dans lequel lesdits un ou plusieurs éléments de support incluent un ou plusieurs rouleaux (31),
- au moins un élément électrique (200, 61) monté dans le tambour (50),
- une unité de transmission d'énergie sans fil (62) fixée audit caisson (20) ou à un composant (22) dudit sèche-linge (10) non mobile par rapport audit caisson (20),
- une unité de réception d'énergie sans fil (63) montée dans/sur ledit tambour (50),
dans lequel ladite unité de transmission d'énergie sans fil (62) est couplée de manière électromagnétique à ladite unité de réception d'énergie sans fil (63), pour transmettre de l'énergie électrique à cette dernière, et
dans lequel ladite unité de réception d'énergie sans fil (63) est couplée électriquement audit au moins un élément électrique (200, 61), pour fournir de l'énergie électrique à ce dernier,
**caractérisé en ce que**
ladite unité de réception d'énergie sans fil (63) et ladite unité de transmission d'énergie sans fil (62) sont de forme annulaire, centrées avec le centre du tambour (50), et montées de manière radialement parallèle respectivement sur ledit caisson (20), ou sur ledit composant (22) dudit sèche-linge (10) non mobile par rapport audit caisson (20), et sur ledit tambour (50).

2. Sèche-linge (10) selon la revendication 1, **caractérisé en ce que** ledit au moins un élément électrique (200, 61) comprend au moins un élément chauffant (200).

3. Sèche-linge (10) selon la revendication 1 ou 2, **caractérisé en ce que** ledit au moins un élément électrique (200, 61) comprend au moins une unité d'interface (61) conçue pour transmettre sans fil des données.

4. Sèche-linge (10) selon l'une quelconque des revendications précédentes, **caractérisé en ce que** ledit élément électrique (200, 61) comprend au moins un élément capteur.

5. Sèche-linge (10) selon la revendication 4, **caractérisé en ce que** ledit au moins un élément capteur comprend au moins un élément de détection de température.

6. Sèche-linge (10) selon l'une ou plusieurs des revendications précédentes, comprenant une unité de commande électronique (60) qui commande des composants électriques et électroniques dudit sèche-linge (10).

7. Sèche-linge (10) selon l'une quelconque des revendications précédentes, **caractérisé en ce que** l'unité de transmission d'énergie (62) comprend une bobine de transmission (620) générant un champ magnétique, et l'unité de réception d'énergie (63) comprend une bobine de réception (630) générant de l'énergie à partir du champ magnétique généré par la bobine de transmission (620), et fournissant l'énergie générée à l'au moins un élément électrique (200, 61).

8. Sèche-linge (10) selon la revendication 7, **caractérisé en ce que** la bobine de transmission (620) et la bobine de réception (630) sont alignées, centrées et parallèles dans la direction radiale.

9. Sèche-linge (10) selon la revendication 7 ou 8, **caractérisé en ce que** la bobine de transmission (620) et la bobine de réception (630) ont une dimension de rayon commune approximativement égale au rayon externe du tambour (50), et sont espacées dans la direction axiale d'une distance inférieure à leur rayon.

10. Sèche-linge (10) selon l'une quelconque des revendications précédentes, **caractérisé en ce que** l'unité de réception d'énergie sans fil (63) comprend un élément de blindage magnétique de réception (631), et l'unité de transmission d'énergie sans fil (62) comprend un élément de blindage magnétique de transmission (621).

11. Sèche-linge (10) selon la revendication 10 lorsqu'elle dépend de la revendication 7, **caractérisé en ce que** l'élément de blindage magnétique de réception (631) est positionné entre la bobine de réception (630) et le côté tambour (50), et l'élément de blindage magnétique de transmission (621) est positionné entre la bobine de transmission (620) et le caisson (20) ou le composant (22) dudit sèche-linge (10) non mobile par rapport audit caisson (20) auquel ladite unité de transmission d'énergie sans fil (62) est fixée.

12. Sèche-linge (10) selon la revendication 10 ou 11 lorsqu'elle dépend de la revendication 6, **caractérisé en ce que** l'unité de réception d'énergie sans fil (63) comprend un élément de blindage de réception (631) positionné sur le côté opposé de la bobine de réception (630) par rapport à l'unité de transmission d'énergie sans fil (62).

13. Sèche-linge (10) selon la revendication 10 ou 11 ou 12 lorsqu'elle dépend de la revendication 7, **caractérisé en ce que** l'unité de transmission d'énergie sans fil (62) comprend un élément de blindage de transmission (621) positionné sur le côté opposé de la bobine de transmission (620) par rapport à l'unité de réception d'énergie sans fil (63).

14. Sèche-linge (10) selon l'une quelconque des revendications précédentes, **caractérisé en ce que** l'unité de réception d'énergie sans fil (63) comprend au moins deux bobines de réception (630) et l'au moins un élément électrique (200, 61) comprend au moins deux éléments électriques (200, 61), les au moins deux bobines de réception (630) alimentant, respectivement, les au moins deux éléments électriques (200, 61).

15. Sèche-linge (10) selon l'une quelconque des revendications précédentes lorsqu'elle dépend des revendications 4 et 6 et 7, **caractérisé en ce que** l'unité de réception d'énergie sans fil (63) comprend une autre bobine (640) agencée pour transférer sans fil à ladite unité de commande (60) des données de mesure provenant dudit au moins un élément capteur.
